# FASCICULE DE BREVET EUROPEEN

(11) **EP 2 292 483 B1**
(45) Date de publication et mention de la délivrance du brevet: **23.05.2012**
(21) Numéro de dépôt: 10172455.7
(22) Date de dépôt: 11.08.2010
(51) Int. Cl.: B60T 13/74, B60T 13/575

(54) **Système de freins à servofrein électrique**
Bremssystem mit elektrischem Bremskraftverstärker
Brake system comprising an electric brake booster

(30) Priorité: 07.09.2009 FR 0904246
(43) Date de publication de la demande: 09.03.2011
(73) Titulaire: Robert Bosch GmbH, 70442 Stuttgart (DE)
(72) Inventeur: Richard, Philippe, 77500 CHELLES (FR); Gaffe, François, 93140 BONDY (FR); Cagnac, Bastien, 60660 CRAMOISY (FR)
(74) Mandataire: Hurwic, Aleksander Wiktor

(56) Documents cités:
- DE-A1- 10 057 557
- DE-A1-102007 018 469

## Description

### Domaine de l'invention

La présente invention concerne un système de freins à maître-cylindre et servofrein électrique comprenant une tige de poussée en-trainée par un moteur commandé et transmettant au maître-cylindre, la poussée générée par le moteur du servofrein et/ou directement celle exercée sur la pédale de frein.

De tels systèmes de freins sont connus de manière générale **et notamment de** DE 100 57 557 **et** DE 10 2007 018469.

### But de l'invention

La présente invention a pour but de développer un système de freins à maître-cylindre et servofrein électrique permettant d'intégrer avantageusement la commande de frein en cas de défaillance du servofrein et dont l'encombrement soit réduit.

### Exposé et avantages de l'invention

A cet effet, la présente invention concerne un servofrein comportant un entraînement à une crémaillère relié à un piston d'actionneur pour agir sur le maître-cylindre,
- l'entraînement à crémaillère ayant en sortie du moteur, une transmission avec un pignon et une crémaillère, portée par un manchon coulissant dans un palier du corps du servofrein en y étant bloqué en rotation,
- le piston d'actionneur comprend
   * un manchon logé dans le manchon portant la crémaillère et
   * une collerette à l'avant du manchon formant
      o une surface d'appui du ressort de rappel du manchon et
      o un logement avec un épaulement circulaire constituant la surface d'appui du disque de réaction, et
      o un plongeur relié à la tige de commande et logé dans le manchon du piston d'actionneur pour commander le servofrein et agir en cas de défaillance du servofrein, directement sur le disque de réaction, dont il est, en fonctionnement normal, séparé par l'intervalle de saut.
         Ainsi, l'invention permet de commander le maître-cylindre soit par le servofrein qui agit sur le disque de réaction soit par la tige de commande et le piston plongeur en cas de défaillance du servofrein et qui agit également sur le disque de réaction.
         Suivant une autre caractéristique avantageuse, une coupelle en tôle à épaulement appliquée contre la face avant de la collerette et dans son logement à épaulement circulaire pour recevoir le disque de réaction et former aussi un logement auxiliaire pour la pièce intermédiaire mobile par rapport au dos du disque de réaction en laissant l'intervalle de saut, le logement étant ouvert pour le passage du poussoir appuyé contre la pièce intermédiaire et soumis à l'action du piston plongeur.
         Grâce à ce chevauchement des surfaces d'appui sur la collerette, le piston d'actionneur peut être réalisé de façon avantageuse tant du point de vue industriel qu'économique, par une pièce en matière plastique, puisque cette pièce n'aura à transmettre que les efforts de compression que sur une épaisseur de matière très réduite.
         Suivant une autre caractéristique avantageuse, le piston d'actionneur est en matière plastique injectée et la face avant de sa collerette comporte une nervure périphérique bordant le logement et coiffée aussi par la coupelle, la surface d'appui du manchon au dos de la collerette et la surface de jonction de la nervure et de la collerette se chevauchant radialement.
         Suivant une autre caractéristique avantageuse,
- le boîtier du servofrein est formé d'une partie avant et d'une partie arrière,
- la partie avant a un retour recevant l'arrière du corps du maître-cylindre, et elle est réunie au maître-cylindre et à la partie arrière,
- la partie arrière reçoit l'entraiment à crémaillère avec le piston d'actionneur, le plongeur, le poussoir, la pièce intermédiaire et le disque de réaction ainsi que la tige de poussée,
- la partie arrière ayant un anneau d'assemblage pour la partie avant ainsi que des moyens d'assemblage au tablier séparant l'enceinte du moteur et l'habitacle du véhicule.

Cette réalisation du boîtier du servofrein est particulièrement intéressante pour l'assemblage et les éventuelles interventions car les composants principaux du servofrein sont répartis entre les deux parties du boîtier et peuvent être montés séparément, les deux ensembles ainsi réalisés étant ensuite assemblés mécaniquement par simple engagement et blocage par les moyens d'assemblage tels que des tirants servant par ailleurs à la fixation du système de frein au tablier du véhicule.

Suivant une autre caractéristique, la partie arrière est emmanchée sur la partie avant en venant en butée contre le retour de la partie avant et l'assemblage est réalisé par des tirants, la collerette du piston d'actionneur a un diamètre inférieur à celui de la partie avant et un ressort hélicoïdal de rappel est comprimé entre le retour de la partie avant et le bord de la collerette.

Suivant une autre caractéristique avantageuse, le piston plongeur a une collerette arrière de diamètre supérieur à celui du manchon du piston d'actionneur constituant une butée, le diamètre étant au plus égal à celui de l'ouverture du manchon pour pouvoir y coulisser.

Cette forme de réalisation du plongeur est avantageuse car elle permet de combiner simplement plusieurs fonctions du piston plongeur.

### Dessins

La présente invention sera décrite ci-après de manière plus détaillée à l'aide d'un exemple de réalisation d'un système de freins, représenté dans les dessins annexés dans lesquels :
- la figure 1 est une vue en perspective d'un système de freins selon l'invention, certaines parties étant vues par transparence,
- la figure 2 est une vue de bout du système de freins de la figure 1, à partir du côté du maître-cylindre,
- la figure 4 est une coupe longitudinale axiale du système de freins selon le plan de coupe IV-IV de la figure 2.

### Description d'un mode de réalisation de l'invention

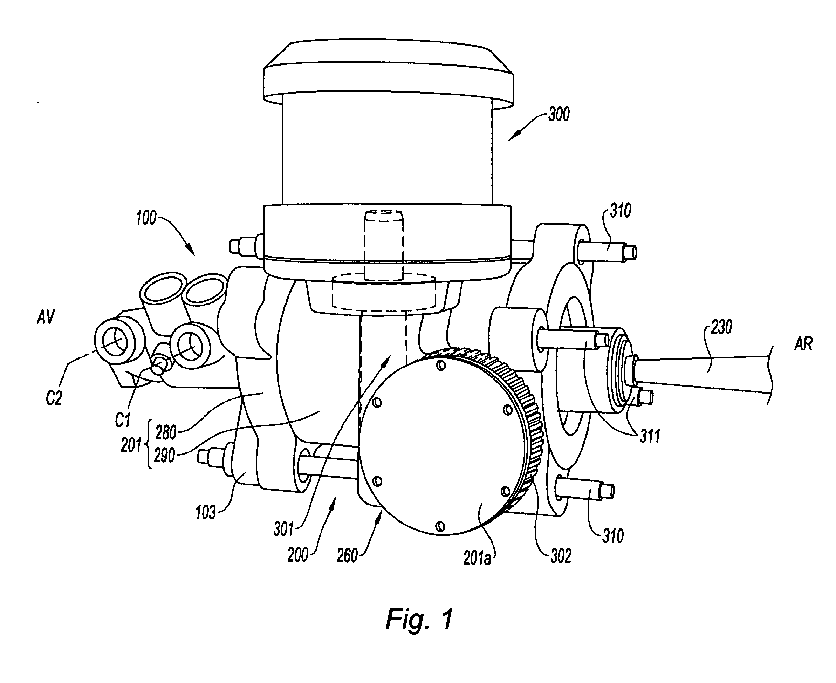

Selon les figures 1, 2, 3, l'invention concerne système de freins composé d'un maître-cylindre 100 et d'un servofrein électrique 200. Dans le présent exemple, le maître-cylindre est un maître-cylindre tandem 100 équipé du servofrein électrique 200 selon un montage coaxial, d'axe XX. L'ensemble (100, 200) ainsi formé est fixé au tablier du véhicule séparant l'enceinte de moteur et l'habitacle.

L'orientation utilisée dans la présente description est l'orientation habituelle d'un maître-cylindre tandem 100 et de son servofrein 200, le maître-cylindre étant situé à gauche (à l'avant AV) et le servofrein à droite (à l'arrière AR), du côté de la tige de commande 230 et de la pédale de frein.

Le servofrein 200 se compose d'un boîtier 201 logeant le piston d'actionneur 220 agissant sur la tige de poussée 130 pour commander le maître-cylindre 100. Le piston d'actionneur 220 est entraîné par un moteur électrique 300 fixé au boîtier 201 et dont l'arbre de sortie entraîne par une transmission à vis 301, une roue à vis 302 logée dans la partie 201a du boîtier 201. Cette roue à vis 302 assure la démultiplication et commande par l'intermédiaire d'un pignon 261 porté par son axe 303, une crémaillère 262 réalisée sur un manchon 263 et entraînant le piston d'actionneur 220.

La figure 1 laisse apparaître la structure particulière du boîtier 201 du servofrein 200 combiné à deux brides d'extrémité, l'une constituée par la partie avant 280 du servofrein du côté du maître-cylindre 100 et l'autre 294, du côté opposé, pour assembler le corps 201 du servofrein 200 par deux tirants 310 reliés aussi à la bride 103 du maître-cylindre 100. La bride arrière 294 porte deux broches 311 supplémentaires pour la fixation en quatre points de l'ensemble ainsi formé au tablier non représenté.

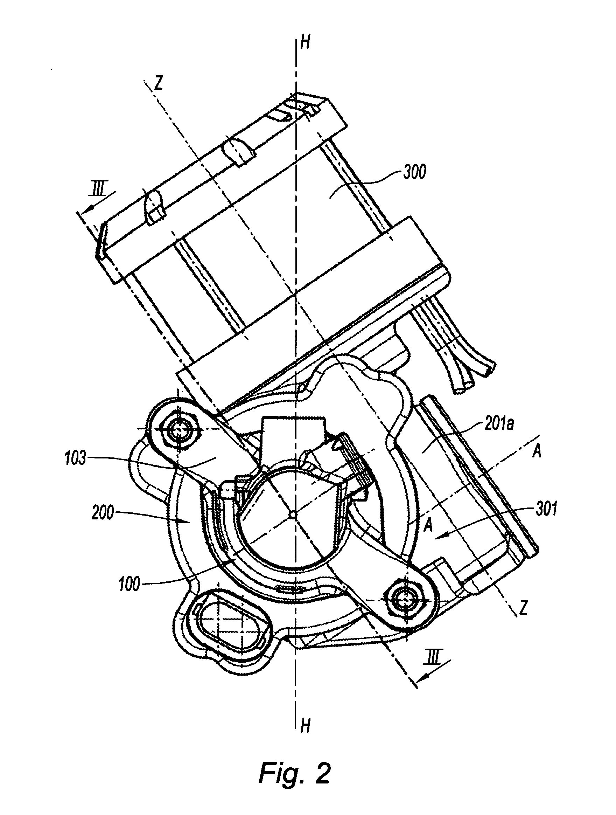

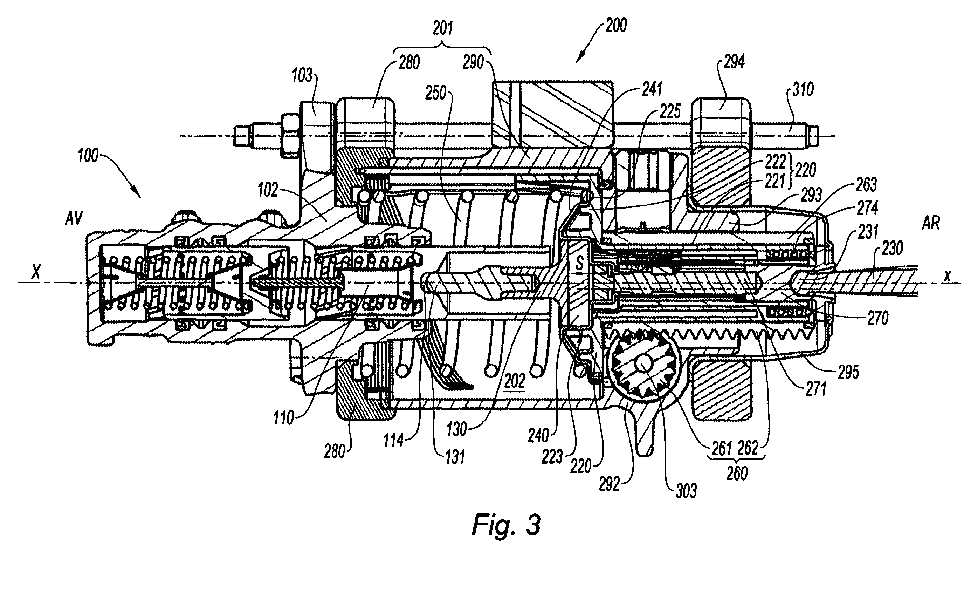

Ces différents éléments apparaissent également à la figure 2 qui montre le maître-cylindre 100, sa bride 103 et l'axe d'inclinaison ZZ par rapport à la direction verticale HH. L'axe d'inclinaison ZZ correspond au plan de coupe III-III. L'axe de l'arbre du moteur 300 est parallèle à l'axe d'inclinaison. L'axe AA de la roue à vis 302 entraîné par la sortie du moteur 300 est perpendiculaire à cette direction ZZ. Dans ces conditions, la crémaillère 262 est coupée perpendiculairement par ce plan comme cela apparaît à la figure 3.

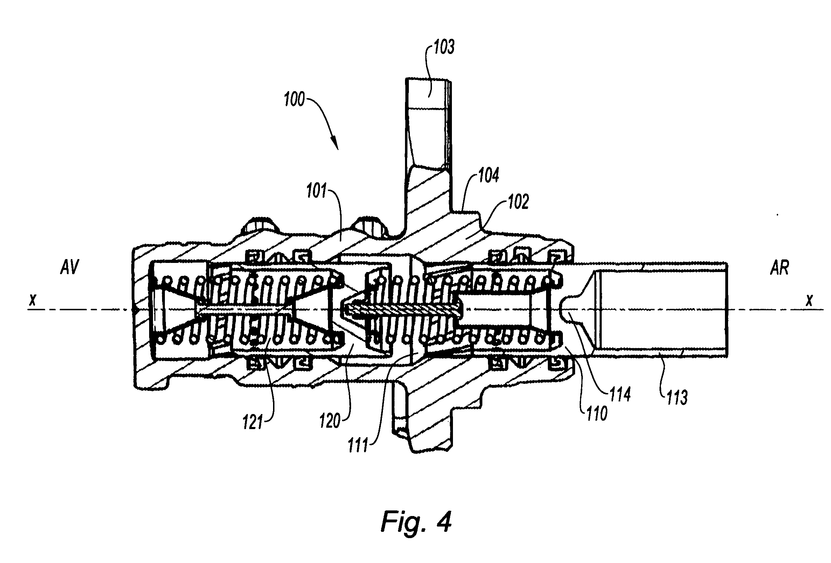

Selon les figures 3 et 4, le maître-cylindre tandem 100 a une structure connue représentée de façon détaillée mais dont la description est simplifiée. Son boîtier 101 loge un piston primaire 110 et un piston secondaire 120 définissant une chambre primaire 111 et une chambre secondaire 121 reliées chacune respectivement à un circuit de frein C1, C2. Le piston primaire 110 comporte un prolongement 113 ouvert à l'arrière, et un logement axial 114 pour recevoir la tête 131 de la tige de poussée 130 actionnée par le servofrein 200 ou par la tige de commande 230 en cas de panne du servofrein. En position de repos du maître-cylindre tandem 100, le prolongement 113 du piston primaire 110 vient en saillie dans la chambre 202 du servofrein 200.

Le boîtier 101 du maître-cylindre 100 comporte une bride 103 à l'arrière 102 du corps formant notamment aussi un épaulement 104 pour recevoir le servofrein 200.

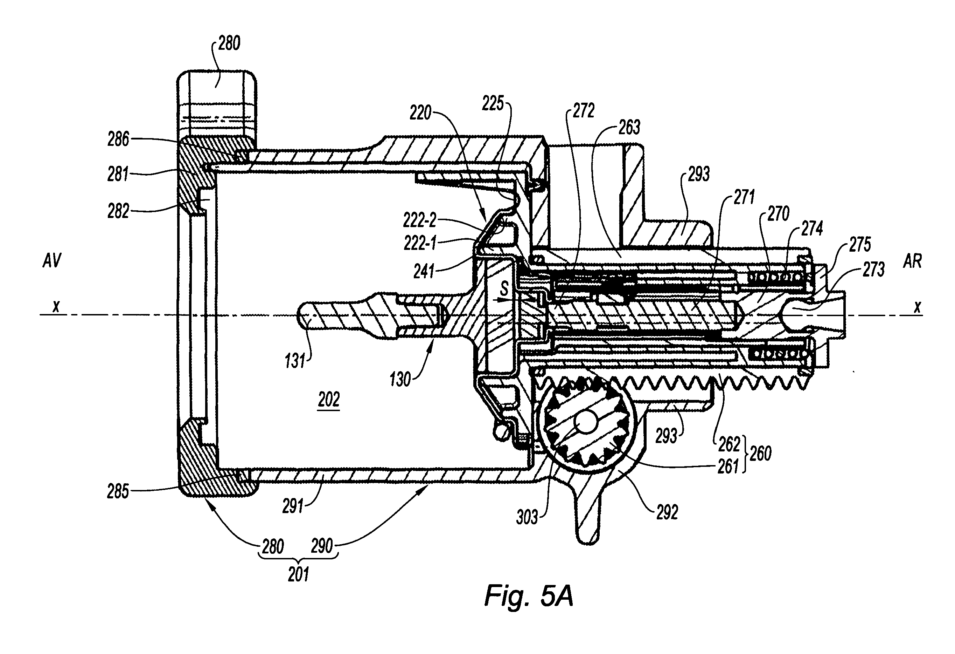

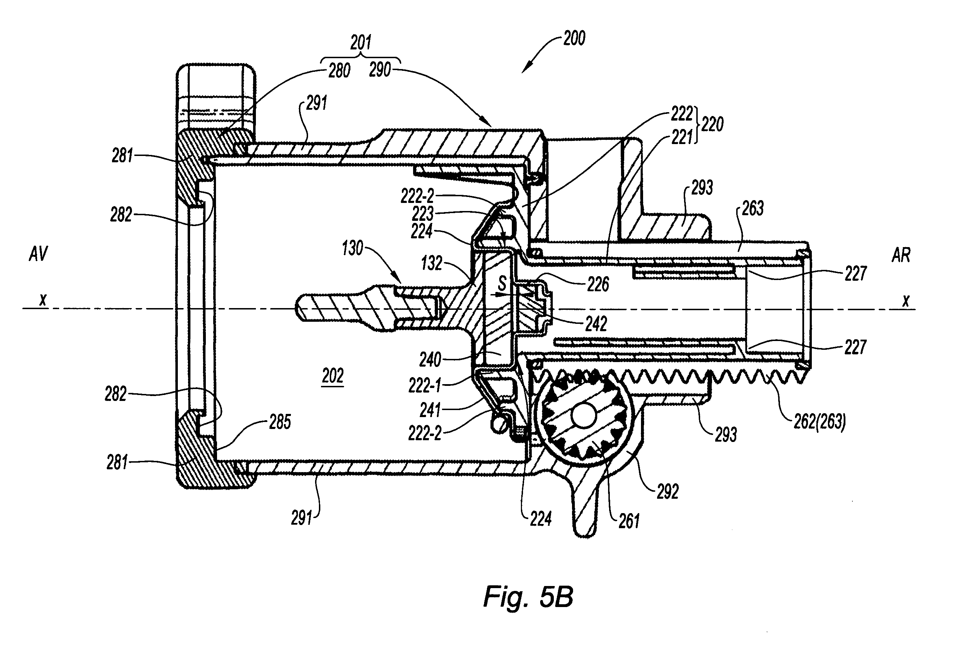

Selon les figures 3, 5A, 5B, le servofrein 200 se compose d'un boîtier 201 logeant un piston d'actionneur 220 relié à un entraînement à crémaillère 260 agissant sur le piston d'actionneur 220 qui lui-même pousse la tige de poussée 130 et reçoit le piston plongeur 270 actionné par la tige de commande 230 reliée à la pédale de frein.

Le boîtier 201 du servofrein 200 comprend deux parties, une partie avant 280 ou socle formant une bride d'assemblage et une partie arrière 290, appliquées l'une sur l'autre avec leurs composants et réunies par des tirants 310 portant les moyens d'assemblage du maître-cylindre tandem au servofrein.

La partie avant 280 comporte un retour 281 formant un appui pour venir sur l'arrière 102 et contre la bride 103 du boîtier 101 du maître-cylindre 100. Le retour 281 a un épaulement 285 recevant le bord du manchon 291 de la partie arrière 290 avec interposition d'un joint 286 et une gorge 282 recevant l'extrémité du ressort de rappel 250.

La partie arrière 290 comporte le logement 292 du pignon 261 de la crémaillère 262 ; celle-ci est portée par un manchon 263 coulissant dans un cylindre 293 de diamètre réduit formant un palier. L'anneau d'assemblage 294 formant une bride (figure 3) est emmanché sur le cylindre 293 pour l'assemblage par les tirants 310. Cet anneau 294 maintient un capot 295 couvrant l'arrière du maître-cylindre et porte également les broches supplémentaires 311 de fixation au tablier (figure 1).

Selon les figures 3, 5A, 5B, le piston d'actionneur 220 se compose d'un manchon axial 221 terminé à l'avant par une collerette 222 couverte par une coupelle 241 et munie d'un appui 225 contre lequel vient le ressort de rappel 250 par ailleurs appliqué contre le socle 280 du boîtier 201.

La face avant de la collerette 222 comporte un logement 223 communiquant avec l'intérieur du manchon 221 et formant un épaulement 224 recevant le disque de réaction 240 tenu dans la coupelle à épaulement 241, en tôle, épousant la forme du logement 223 du piston d'actionneur 220 ; elle se prolonge par un logement auxiliaire 226 dans l'ouverture du manchon 221 pour recevoir une pièce intermédiaire 242 rigide, en forme de disque, écartée du dos du disque de réaction 240 d'un intervalle de consigne correspondant au saut (S) du servofrein. La tige de poussée 130 se termine à l'arrière par un champignon 132 s'appuyant sur la face avant du disque de réaction 240. La tige de commande 230 agit sur le disque de réaction 240 par l'intermédiaire du piston plongeur 270 combiné à un poussoir 271. La tête 272 du poussoir 271 s'appuie contre la pièce intermédiaire 242 en passant par l'ouverture arrière de la coupelle 241.

L'extrémité arrière du manchon 221 forme un logement à épaulement 227 recevant le ressort 274 repoussant le piston plongeur 270 vers l'arrière. Le bord arrière du manchon 221 forme une butée pour limiter l'avancée du piston plongeur 270 par sa collerette avant 275.

Le ressort de rappel 274 s'appuie également sur la collerette 275 du piston plongeur 270 et lui permet d'avancer initialement sous l'effet de la poussée exercée sur la tige de commande 230 pour déclencher le servofrein avant que la tête 272 du poussoir 271 prolongeant le piston plongeur 270 ne touche la face arrière du disque de réaction 240 par le déplacement de la pièce intermédiaire 242.

L'extrémité arrière du piston plongeur 270 a un logement 273 en forme de coupelle sphérique recevant la tête arrondie 231 de la tige de commande 230.

La tige de commande 230 coopère avec un capteur de déplacement 235 qui génère un signal détectant le mouvement de la tige de commande 230 avancée par la poussée de la pédale de frein. Ce signal est transmis à un circuit de commande non représenté agissant sur le moteur du servofrein pour entraîner le piston d'actionneur 220.

En fonctionnement normal, hors défaillance du servofrein 200, la détection du mouvement de la tige de commande 230 met en oeuvre le servofrein dont le manchon 263 déplacée par l'entraînement à crémaillère 260, pousse sur la collerette 222 entraînant ainsi la tige de poussée 130 et le piston primaire 110. Au début de ce mouvement, le piston plongeur 270 n'agit pas sur le disque de réaction 240 par le poussoir 271 et la pièce intermédiaire 242 car l'écartement correspondant au saut (S). Ce n'est qu'en cas de défaillance du servofrein 200 que la poussée de la tige de commande 230 est transmise directement par le piston plongeur 270, le poussoir 271 et la pièce intermédiaire, rigide 242 au disque de réaction 240.

Ainsi, dans ce montage selon l'invention, le disque de réaction 240 joue le rôle d'intermédiaire avec le piston primaire 110 puisqu'il transmet à la fois l'action du servofrein 200 en fonctionnement normal et directement l'action de la tige de commande 230 en fonctionnement de secours lorsque le servofrein est défaillant.

La partie arrière 290 reçoit l'anneau 294 pour la fixation des tirants 310. Le fond de la partie arrière 290 se termine par le cylindre 293 formant le palier du manchon 221 portant la crémaillère 262 de l'entraînement à crémaillère 260. Le cylindre formant palier 293 enveloppe le manchon 263 sur toute sa périphérie et sur une longueur importante sauf à l'emplacement de la crémaillère 262 de façon à guider efficacement le coulissement et absorber les efforts exercés par le pignon 261 sur la crémaillère 262.

La figure 4 met en évidence la surface d'appui périphérique du manchon 263 contre l'arrière de la collerette 222 à l'opposé de la nervure cylindrique 222-1 bordant la cavité 223 de sorte que la poussée du manchon 263 soit transmise par cette nervure 222-1 à la coupelle 241 qui chevauche cette paroi et permet ainsi d'entraîner le disque à réaction 240 et la tige de poussée 130. La collerette 222 est aussi renforcée dans ce mode de réalisation par une autre nervure périphérique 222-2, coaxiale, assurant le renfort au niveau de l'appui du ressort 250.

Ainsi le bord avant du manchon 263 chevauche, dans la direction radiale (ou direction diamétrale), la surface de l'épaulement 224 et de la coupelle 241 par lequel le piston d'actionneur 220 s'appuie sur le disque de réaction 240 ce qui permet de réaliser le piston 220 en une matière plastique et non en métal, simplifiant ainsi sa fabrication.

L'organisation du servofrein 200 avec le boîtier 201 en deux parties 280, 290 facilite le montage du maître-cylindre tandem 100 au servofrein 200 :
- la partie avant 280 s'attache au maître-cylindre 100 et reçoit le ressort de rappel 250 ;
- la partie arrière 290, munie de l'anneau 294 formant une bride, reçoit l'entraînement à crémaillère 260 et son moteur 300 ainsi que le piston plongeur 270, le disque de réaction 240 et la tige de poussée 130.

Ensuite on assemble les deux parties 280, 290 du boîtier 201 par les tirants 310.

La présente invention concerne de préférence des applications dans l'industrie des freins de véhicules automobiles.

### NOMENCLATURE

- 100: maître-cylindre tandem
- 101: corps du maître-cylindre tandem
- 102: arrière du corps
- 103: bride
- 104: épaulement
- 110: piston primaire
- 111: chambre du piston primaire
- 113: prolongement du piston primaire
- 114: logement
- 120: piston secondaire
- 121: chambre du piston secondaire
- 130: tige de poussée
- 131: tête de la tige de poussée
- 132: champignon

- 200: servofrein électrique
- 201: boîtier du servofrein
- 202: chambre
- 203: rainure
- 220: piston d'actionneur
- 221: manchon
- 222: collerette
- 222-1: nervure périphérique
- 222-2: nervure périphérique
- 223: logement
- 224: épaulement
- 225: appui du ressort
- 226: logement auxiliaire
- 227: logement à ressort
- 229: épaulement
- 230: tige de commande
- 231: tête de la tige de commande
- 235: capteur de déplacement
- 240: disque de réaction
- 241: coupelle
- 242: pièce intermédiaire
- 250: ressort de rappel
- 260: entraînement à crémaillère
- 261: pignon
- 262: crémaillère
- 263: manchon
- 270: piston plongeur
- 271: poussoir
- 272: tête du poussoir
- 273: logement
- 274: ressort de rappel
- 275: collerette
- 276: collerette arrière
- 280: partie avant / socle
- 281: retour
- 282: gorge
- 283: bride d'assemblage
- 284: bord de l'ouverture de la partie avant
- 285: épaulement
- 286: joint
- 290: partie arrière
- 291: manchon
- 292: logement
- 293: cylindre
- 294: anneau d'assemblage
- 295: capot

- 300: moteur
- 301: transmission à vis
- 302: roue à vis
- 303: axe de la roue à vis
- 310: tirant
- 311: broche

- C1, C2: circuits de freins
- S: saut

## Revendications

1. Système de freins à maître-cylindre et servofrein électrique comprenant une tige de poussée (130) et transmettant au maître-cylindre (100), la poussée générée par le moteur (300) du servofrein et/ou directement celle exercée sur la pédale de frein par un disque de réaction (240),
**caractérisé en ce que**
le servofrein (200) comporte un entraînement à une crémaillère (260) relié à un piston d'actionneur (220) pour agir sur le maître-cylindre (100),
- l'entraînement à crémaillère (260) ayant en sortie du moteur (300), une transmission (301) avec un pignon (261) et une crémaillère (262), portée par un manchon (263) coulissant dans un palier du corps (201) du servofrein en y étant bloqué en rotation,
- le piston d'actionneur (220) comprend
* un manchon (221) logé dans le manchon (263) portant la crémaillère et
* une collerette (222) à l'avant du manchon (221) formant
o une surface d'appui du ressort de rappel (250) du manchon (263) et
o un logement (223) avec un épaulement circulaire (224) constituant la surface d'appui du disque de réaction (240), et
o un plongeur (270) relié à la tige de commande (230) et logé dans le manchon (221) du piston d'actionneur (220) pour commander le servofrein et agir en cas de défaillance du servofrein, directement sur le disque de réaction (240), dont il est, en fonctionnement normal, séparé par l'intervalle de saut (S).

2. Système de freins selon la revendication 1,
**caractérisé par**
une coupelle en tôle à épaulement (241) appliquée contre la face avant de la collerette (222) et dans son logement (223) à épaulement circulaire (224) pour recevoir le disque de réaction (240) et former aussi un logement auxiliaire (226) pour la pièce intermédiaire (242) mobile par rapport au dos du disque de réaction (240) en laissant l'intervalle de saut (S),
le logement (226) étant ouvert pour le passage du poussoir (271) appuyé contre la pièce intermédiaire (242) et soumis à l'action du piston plongeur (270).

3. Système de freins selon les revendications 1 et 2,
**caractérisé en ce que**
le piston d'actionneur (220) est en matière plastique injectée et la face avant de sa collerette (222) comporte une nervure périphérique (221-1) bordant le logement (223) et coiffée aussi par la coupelle (241), la surface d'appui du manchon (263) au dos de la collerette (222) et la surface de jonction de la nervure (222-1) et de la collerette (222) se chevauchant radialement.

4. Système de freins selon la revendication 1,
**caractérisé en ce que**
- le boîtier (201) du servofrein est formé d'une partie avant (280) et d'une partie arrière (290),
- la partie avant (280) a un retour (281) recevant l'arrière (102) du corps (101) du maître-cylindre (100), et elle est réunie au maître-cylindre (100) et à la partie arrière (290),
- la partie arrière (290) reçoit l'entraiment à crémaillère (260) avec le piston d'actionneur (220), le plongeur (270), le poussoir (271), la pièce intermédiaire (242) et le disque de réaction (240) ainsi que la tige de poussée (130),
- la partie arrière (290) ayant un anneau d'assemblage (294) pour la partie avant (280) ainsi que des moyens d'assemblage (310, 311) au tablier séparant l'enceinte du moteur et l'habitacle du véhicule.

5. Système de freins selon la revendication 3,
**caractérisé en ce que**
la partie arrière (290) est emmanchée sur la partie avant (280) en venant en butée contre le retour (281) de la partie avant (280) et l'assemblage est réalisé par des tirants (310),
la collerette (222) du piston d'actionneur (220) a un diamètre inférieur à celui de la partie avant (280) et
un ressort hélicoïdal de rappel (250) est comprimé entre le retour (281) de la partie avant (280) et le bord (225) de la collerette (222).

6. Système de freins selon la revendication 1,
**caractérisé en ce que**
le piston plongeur (270) a une collerette arrière (275) de diamètre supérieur à celui du manchon (221) du piston d'actionneur (220) constituant une butée, le diamètre étant au plus égal à celui de l'ouverture du manchon (263) pour pouvoir y coulisser.

## Claims

1. Brake system with master cylinder and electric brake booster comprising a brake actuator push rod (130) and transmitting to the master cylinder (100) the thrust generated by the motor (300) of the brake booster and/or directly that applied to the brake pedal by a reaction disk (240),
**characterized in that**
the brake booster (200) comprises a drive with a rack (260) connected to an actuating piston (220) in order to act on the master cylinder (100),
- the rack drive (260) having, at the output of the motor (300) a transmission (301) with a pinion (261) and a rack (262), supported by a sleeve (263) sliding in a bearing of the body (201) of the brake booster while being prevented from rotating therein,
- the actuating piston (220) comprises
* a sleeve (221) housed in the sleeve (263) supporting the rack and
* a collar (222) at the front of the sleeve (221) forming
o a bearing surface of the return spring (250) of the sleeve (263) and
o a housing (223) with a circular shoulder (224) forming the bearing surface of the reaction disk (240), and
o a plunger (270) connected to the control rod (230) and housed in the sleeve (221) of the actuating piston (220) in order to control the brake booster and act, in the event of failure of the brake booster, directly on the reaction disk (240) from which, in normal operation, it is separated by the jump gap (S).

2. Brake system according to Claim 1,
**characterized by**
a shouldered metal-sheet cup (241) pressed against the front face of the collar (222) and in its housing (223) with circular shoulder (224) in order to receive the reaction disk (240) and also form an auxiliary housing (226) for the intermediate part (242) that can move relative to the back of the reaction disk (240) while leaving the jump gap (S),
the housing (226) being open for the passage of the push rod (271) pressed against the intermediate part (242) and subjected to the action of the plunger piston (270).

3. Brake system according to Claims 1 and 2,
**characterized in that**
the actuating piston (220) is made of injected plastic and the front face of its collar (222) comprises a peripheral rib (221-1) bordering the housing (223) and covered also by the cup (241), the bearing surface of the sleeve (263) on the back of the collar (222) and the surface of junction of the rib (222-1) and of the collar (222) overlapping radially.

4. Brake system according to Claim 1,
**characterized in that**
- the casing (201) of the brake booster is formed by a front portion (280) and a rear portion (290),
- the front portion (280) has a return (281) receiving the rear (102) of the body (101) of the master cylinder (100), and it is joined to the master cylinder (100) and to the rear portion (290),
- the rear portion (290) receives the rack drive (260) with the actuating piston (220), the plunger (270), the push rod (271), the intermediate part (242) and the reaction disk (240) and also the brake actuator push rod (130),
- the rear portion (290) having an assembly ring (294) for the front portion (280) and means (310, 311) for assembly to the bulkhead separating the engine compartment and the passenger compartment of the vehicle.

5. Brake system according to Claim 3,
**characterized in that**
the rear portion (290) is fitted onto the front portion (280) coming to butt against the return (281) of the front portion (280) and the assembly is made by tierods (310),
the collar (222) of the actuating piston (220) has a smaller diameter than that of the front portion (280) and
a coil return spring (250) is compressed between the return (281) of the front portion (280) and the edge (225) of the collar (222).

6. Brake system according to Claim 1,
**characterized in that**
the plunger piston (270) has a rear collar (275) with a larger diameter than that of the sleeve (221) of the actuating piston (220) forming a stop, the diameter being at most equal to that of the opening of the sleeve (263) in order to be able to slide therein.

## Patentansprüche

1. Bremssystem mit einem Hauptzylinder und einem elektrischen Servomotor, der eine Schubstange (130) aufweist und dem Hauptzylinder (100) den vom Motor (300) der Servobremse erzeugten Schub und/oder direkt den Schub, der von einer Reaktionsscheibe (240) auf das Bremspedal ausgeübt wird, überträgt,
**dadurch gekennzeichnet, dass**
die Servobremse (200) einen Zahnstangenantrieb (260) aufweist, der mit einem Aktorkolben (220) verbunden ist, um auf den Hauptzylinder (100) einzuwirken,
- der Zahnstangenantrieb (260) am Ausgang des Motors (300) ein Getriebe (301) mit einem Ritzel (261) und einer Zahnstange (262) aufweist, das an einer Muffe (263) vorgesehen ist, die in einem Lager des Körpers (201) der Servobremse verschiebbar und dabei darin in Drehung blockiert ist,
- der Aktorkolben (220) Folgendes aufweist:
• eine Muffe (221), die in der Muffe (263) aufgenommen ist, die die Zahnstange trägt, und
• einen Kragen (222) im vorderen Teil der Muffe (221), der Folgendes bildet:
o eine Fläche zum Abstützen der Rückstellfeder (250) der Muffe (263) und
o eine Aufnahme (223) mit einem kreisförmigen Absatz (224), der die Fläche zum Abstützen der Reaktionsscheibe (240) bildet,
o wobei ein Tauchkolben (270) mit der Steuerstange (230) verbunden und in der Muffe (221) des Aktorkolbens (220) aufgenommen ist, um die Servobremse zu steuern und bei einem Ausfall der Servobremse direkt auf die Reaktionsscheibe (240) zu wirken, von der er im Normalbetrieb mit dem Sprungintervall (S) getrennt ist.

2. Bremssystem nach Anspruch 1,
**gekennzeichnet durch**
eine Schale aus Blech mit einem Absatz (241), die gegen die vordere Fläche des Kragens (222) und in seine Aufnahme (223) mit kreisförmigem Absatz (224) gedrückt ist, um die Reaktionsscheibe (240) aufzunehmen und so eine Hilfsaufnahme (226) für das Zwischenstück (242) zu bilden, das in Bezug auf die Rückseite der Reaktionsscheibe (240) beweglich ist, wobei das Sprungintervall (S) beibehalten wird,
wobei die Aufnahme (226) für das Durchführen des Stößels (271) geöffnet ist, der gegen das Zwischenstück (242) gedrückt und der Wirkung des Tauchkolbens (270) ausgesetzt ist.

3. Bremssystem nach den Ansprüchen 1 und 2,
**dadurch gekennzeichnet, dass**
der Aktorkolben (220) aus Kunststoff-Spritzgussmaterial besteht und die vordere Fläche seines Kragens (222) eine Umfangsrippe (221-1) aufweist, die die Aufnahme (223) umrandet und auch von der Schale (241) bedeckt ist, wobei sich die Stützfläche der Muffe (263) auf der Rückseite des Kragens (222) und die Verbindungsfläche zwischen der Rippe (222-1) und dem Kragen (222) radial überlappen.

4. Bremssystem nach Anspruch 1,
**dadurch gekennzeichnet, dass**
- das Gehäuse (201) der Servobremse aus einem vorderen Abschnitt (280) und einem hinteren Abschnitt (290) besteht,
- der vordere Abschnitt (280) einen Rücksprung (281) aufweist, der den hinteren Teil (102) des Körpers (101) des Hauptzylinders (100) aufnimmt, und mit dem Hauptzylinder (100) und dem hinteren Abschnitt (290) verbunden ist,
- der hintere Abschnitt (290) den Zahnstangenantrieb (260) mit dem Aktorkolben (220), dem Tauchkolben (270), dem Stößel (271), dem Zwischenstück (242), der Reaktionsscheibe (240) und der Schubstange (130) aufnimmt,
- der hintere Abschnitt (290) einen Befestigungsring (294) für den vorderen Abschnitt (280) und Mittel (310, 311) zur Befestigung an der Spritzwand aufweist, die den Motorraum von dem Fahrzeuginnenraum trennt.

5. Bremssystem nach Anspruch 3,
**dadurch gekennzeichnet, dass**
der hintere Abschnitt (290) auf den vorderen Abschnitt (280) aufgesteckt ist und an den Rücksprung (281) des vorderen Abschnitts (280) in Anschlag gelangt, wobei das Zusammenfügen über Zugbolzen (310) realisiert ist,
der Kragen (222) des Aktorkolbens (220) einen Durchmesser hat, der kleiner ist als derjenige des vorderen Abschnitts (280), und
eine spiralförmige Rückstellfeder (250) zwischen dem Rücksprung (281) des vorderen Abschnitts (280) und dem Rand (225) des Kragens (222) zusammengedrückt ist.

6. Bremssystem nach Anspruch 1,
**dadurch gekennzeichnet, dass**
der Tauchkolben (270) einen hinteren Kragen (275) aufweist, dessen Durchmesser größer ist als derjenige der Muffe (221) des Aktorkolbens (220) und der einen Anschlag bildet, wobei der Durchmesser maximal dem der Öffnung der Muffe (263) entspricht, um darin gleiten zu können.
